**Europäisches Patentamt**

**European Patent Office**

**Office européen des brevets**

(19)

(11) Veröffentlichungsnummer: **0 252 420**
**B1**

(12)

# EUROPÄISCHE PATENTSCHRIFT

(45) Veröffentlichungstag der Patentschrift:
**05.09.90**

(21) Anmeldenummer: **87109455.3**

(22) Anmeldetag: **01.07.87**

(51) Int. Cl.⁵: **B67D 3/00,** B67D 3/02,
B65D 77/06, G01F 11/32

(54) **Anordnung zum Bereithalten und zur dosierten Abgabe von Flüssigkeiten.**

(30) Priorität: **07.07.86 DE 3622777**

(43) Veröffentlichungstag der Anmeldung:
**13.01.88 Patentblatt 88/2**

(45) Bekanntmachung des Hinweises auf die Patenterteilung:
**05.09.90 Patentblatt 90/36**

(84) Benannte Vertragsstaaten:
**AT BE CH DE ES FR GB GR IT LI LU NL SE**

(56) Entgegenhaltungen:
AT-A- 373 564
FR-A- 2 489 803
FR-A- 2 520 471
US-A- 3 460 723
US-A- 3 667 499

(73) Patentinhaber: **Bosch-Siemens Hausgeräte GmbH,
Hochstrasse 17, D-8000 München 80(DE)**
Patentinhaber: **Coca-Cola Company, P.O.Drawer 1734,
Atlanta Georgia 30301(US)**

(72) Erfinder: **Färber, Karlheinz, Dipl.-Ing.(FH)), Giegerweg 1,
D-7928 Giengen(DE)**
Erfinder: **Deininger, Anton, Dipl.-Ing.(FH),
Vogtstrasse 20, D-8887 Bachhagel(DE)**
Erfinder: **Plester, Georg, Dipl.-Ing., Rheinstrasse 79,
D-4300 Essen18(DE)**
Erfinder: **Günther, Manfred, Elfriedenstrasse 14d,
D-4300 Essen1(DE)**
Erfinder: **Troska, Georg, Erlenstrasse 23,
D-4352 Herten(DE)**

(74) Vertreter: **Rode, Franz et al, BOSCH-SIEMENS
HAUSGERÄTE GMBH Patent- und Vertragswesen
Hochstrasse 17, D-8000 München 80(DE)**

# Beschreibung

Die vorliegende Erfindung bezieht sich auf eine Anordnung zum Bereithalten und zur dosierten Abgabe von Flüssigkeiten, insbesondere von Getränkekonzentraten, unter Verwendung eines Flüssigkeits-Vorratsbehälters, an dessen in der Betriebslage unten liegenden Ausgabeöffnung eine Dosierkammer-Ausgabeeinrichtung mit eingangsseitigen und ausgangsseitigen alternierend durch einen im Dosierkammergehäuse verschiebbaren Steuerschieber verschließbaren Durchflußöffnungen angeordnet ist, wobei die Dosierkammer-Ausgabeeinrichtung durch die Schwerkraft der Flüssigkeit unter Luftaustausch zum Volumenausgleich vom Vorratsbehälter je nach Lage des Steuerschiebers vom Flüssigkeits-Vorratsbehälter gefüllt bzw. nach unten ins Freie entleerbar ist.

Derartige Anordnungen kommen beispielsweise und bevorzugt zur Anwendung in Getränkeautomaten, mittels denen karbonisiertes Wasser mit Getränkekonzentraten zu einem Erfrischungsgetränk vermischt werden. Vorratsbehälter für die Getränkekonzentrate sind üblicherweise aus formstabilen und gasundurchlässigem Material gefertigt und haben die Form einer Flasche oder aber eines Quaders. Diese Vorratsbehälter sind beim Einsatz in einem Getränkeautomaten mit der Ausgabeöffnung nach unten gerichtet angeordnet. An diese Ausgabeöffnung ist eine Dosierkammer-Ausgabeeinrichtung mit eingangsseitigem und ausgangsseitigem alternierend durch einen Steuerschieber verschließbaren Durchflußöffnungen befestigt. Die Flüssigkeit (Getränkekonzentrat) strömt durch Schwerkraft aus dem Vorratsbehälter in die Dosierkammer-Ausgabeeinrichtung, wenn deren eingangsseitige Durchflußöffnung geöffnet ist. Wird diese eingangsseitige Durchflußöffnung durch den Steuerschieber verschlossen und gleichzeitig die ausgangsseitige Durchflußöffnung geöffnet, so fließt — ebenfalls durch Schwerkraft — die Flüssigkeit aus diesem Dosiersystem heraus, wobei die Flüssigkeitsmenge durch den Dosierkammer-Inhalt im wesentlichen bestimmt ist.

Bei den bekannten Dosierkammer-Ausgabeeinrichtungen wirken sich jedoch Leckströme, welche zwischen dem Steuerschieber und dem Dosierkammergehäuse möglich sind, schwer kontrollierbar auf die ausgegebene Menge aus. Eine möglichst spaltfreie Ausgestaltung der Führung zwischen dem Steuerschieber und dem Dosierkammergehäuse zur Vermeidung dieser Leckströme ist deshalb äußerst problematisch, da dieser Steuerschieber möglichst leichtgängig im Dosierkammergehäuse axial verschiebbar sein soll, um in Form eines Tauchankers durch ein elektrisch erzeugtes Magnetfeld sicher verstellt werden zu können. Diese Verstellmethode erfordert keine mechanischen Kopplungen, so daß ein Austausch der Dosierkammer-Ausgabeeinrichtungen im Getränkeautomaten zusammen mit den Vorratsbehältern sehr leicht möglich ist.

Es ist möglich, den Kopfraum des Vorratsbehälters oder einen Pufferraum innerhalb dieses Vorratsbehälters zu belüften (DS OS 2 544 671), um zu erreichen, daß der Flüssigkeitsfluß nicht durch Volumen ausgleichende Luftgegenströmungen und durch sich ausbildenden Unterdruck im Vorratsbehälter behindert wird. Diese Maßnahmen erfordern einen zusätzlichen Aufwand, sie haben sich aber als nicht vorteilhaft erwiesen, da aus der Dosierkammer-Ausgabevorrichtung beim Nachfließen der Flüssigkeit die dort befindliche Luft ohnehin in den Kopfraum des Vorratsbehälters entweicht. Bei den bekannten Systemen hat es sich sogar als zweckmäßig herausgestellt, daß sich im Kopfraum des Vorratsbehälters ein Unterdruck aufbaut, welcher den Leckströmungen zwischen dem Dosierkolben und der Wandung des Dosierkammergehäuses entgegenwirkt.

Auch aus transporttechnischen Gründen und wegen der einfachen Handhabbarkeit hat sich die Ausgestaltung des Vorratsbehälters für Getränkekonzentrate aus formstabilem Material als sehr vorteilhaft erwiesen. Derartige Vorratsbehälter sind aber relativ aufwendig und belastend bei der Entsorgung, zumal zweckmäßigerweise die Behälter nur einmal verwendbar sind und daraufhin weggeworfen werden. Die Zweckmäßigkeit der nur einmaligen Verwendbarkeit der Vorratsbehälter ergibt sich zum einen aus hygienischen Gründen, zum anderen aber wegen getroffener Maßnahmen, die den Gebrauch eines nachgefüllten Vorratsbehälters verhindern sollen. Entsprechende Vorkehrungen werden durch Maßnahmen im Bereich der Ausgabeöffnung des Vorratsbehälters getroffen.

Es ist bekannt (US-A 3 667 499), Flüssigkeiten in einem Foliensack zu bevorraten, aus dem die Flüssigkeit mit Hilfe eines Pumpsystems absaugbar ist. Durch die Saugwirkung folgt der Foliensack zwangsweise dem sich reduzierenden Volumen der Flüssigkeit.

Die Aufgabe der vorliegenden Erfindung liegt nunmehr darin, den Herstellungsaufwand, insbesondere für den Vorratsbehälter und die Entsorgungsprobleme für diese Vorratsbehälter zu reduzieren, ohne daß die Handhabbarkeit dieses Vorratsbehälters beeinträchtigt wird. Durch weitere Maßnahmen soll die Anordnung zum Bereithalten und zur dosierten Abgabe von Flüssigkeiten bezüglich ihrer Funktionstüchtigkeit verbessert werden.

Eine Anordnung, die diesen Forderungen gerecht wird, ist erfindungsgemäß dadurch gekennzeichnet, daß der Vorratsbehälter aufgebaut ist aus einem gasundurchlässigen und im wesentlichen flexiblen Foliensack und einer im wesentlichen formstabilen, luftdurchlässigen, den flexiblen Foliensack insbesondere quaderförmig umschließende Behälterwandung und daß die im wesentlichen formstabile Behälterwandung über den flexiblen Foliensack an einem die Ausgabeöffnung bildenden Anschlußstutzen befestigt ist, mit dem die Dosierkammer-Ausgabeeinrichtung verbindbar ist. Diese Behälterwandung ist bevorzugterweise aus Pappkarton und schachtelartig hergestellt ausgebildet.

Ein nach diesen erfindungsgemäßen Merkmalen aufgebauter Vorratsbehälter zeichnet sich dadurch aus, daß der flexible und gasundurchlässige Foliensack, welcher aus wenigem kostenträchtigen Material, beispielsweise aus einer aluminium-kaschierten Folie hergestellt sein kann, für die darin bevorratete Flüssigkeit, insbesondere für Getränkekonzentrate einen guten Schutz gegenüber der Umgebung bietet, und daß die im wesentlichen formstabile Behälterwandung, die aus billigerem Material - beispielsweise aus Pappkarton - hergestellt sein kann, den ausreichend guten Schutz gegen mechanische Verletzungen dieses Foliensacks bietet und zusätzlich die Mlöglichkeit zur einfachen Hardhabung des Vorratsbehälters gibt. Insbesondere herstellungstechnisch bedingt ist es vorteilhaft, die formstabile Behälterwandung am Anschlußstutzen des Vorratsbehälters mittelbar über den Foliensack zu befestigen. Durch die Verbindung des Anschlußstutzens mit der im wesentlichen formstabilen Behälterwandung wird die für ein problemloses Aufsetzen und Befestigen einer Dosierkammer-Ausgabeeinrichtung an den Anschlußstutzen des Vorratsbehälters erforderliche Festigkeit des gesamten Vorratsbehälters erreicht.

Über die Dosierkammer-Ausgabevorrichtung erfolgt die Entnahme des Inhalts des Vorratsbehälters durch Schwerkraft, wobei gleichzeitiger Volumenaustausch mit Luft die erforderliche Dosierfunktion sicher stellt. Eine Veränderung des vom Foliensack umschlossenen Volumens findet lediglich in dem Rahmen statt, in dem der Volumenaustausch nicht ideal und z.B. durch Temperaturschwankungen und -unterschiede beeinträchtigt ist. Störeinflüsse innerhalb des Vorratsbehälters und durch dessen Wandungen gegen die durch die Schwerkraft des Vorratsbehälter-Inhalts bedingte Ausgabefunktion sind somit eliminiert.

Um zum einen eine gute Möglichkeit zu bieten, die Volumendosierung durch die Dosierkammer-Ausgabeeinrichtung abhängig von der Beschaffenheit der im Vorratsbehälter bevorrateten Flüssigkeit durchführen zu können und zum anderen Schutz gegen mißbräuchliche Verwendung der Vorratsbehälter zu erhalten, ist es zweckmäßig, einen Teil der Dosierkammer-Ausgabeeinrichtung, nämlich den Bereich der eingangsseitigen, durch den Steuerkolben verschließbaren Durchflußöffnung, in den Anschlußstutzen des Vorratsbehälters zu integrieren. Dieser Bereich wird derart ausgestaltet, daß er nach einmaliger Verbindung mit den Hauptteilen der Dosierkammer-Ausgabeeinrichtung unbrauchbar wird. Vor dem Anschluß dieser Dosierkammer-Teil ist die Ausgabeöffnung des Anschlußstutzens durch einen Foliendeckel fest verschlossen.

Wenn der flexible Foliensack innerhalb der formstabilen Behälterwandung nicht verklebt ist, ergibt sich die Problematik, daß innerhalb des Vorratsbehälters sich kein definierter Druckunterschied gegenüber der Außenatmosphäre aufbauen kann. Dies erschwert die Verwendung der bekannten Dosierkammer-Ausgabeeinrichtungen insoweit, da der Leckfluß der durch diese bekannten Ausgabeeinrichtungen zu dosierenden Flüssigkeit nicht durch Unterdruck im Vorratsbehälter behindert werden kann.

Aus diesem Grunde ist es zweckmäßig, die Anordnung zum Bereithalten und zur dosierten Ausgabe von Flüssigkeiten mit einer Dosierkammer-Ausgabeeinrichtung, in welcher ein rohrförmig ausgebildeter Steuerschieber, mit in der Rohrwandung integriertem Tauchanker eines Tauchanker-Elektromagnetsystems längsverschieblich angeordnet ist, auszustatten, die dadurch gekennzeichnet ist, daß die eingangsseitige Durchflußöffnung in die Dosierkammer-Ausgabeeinrichtung zentral im Kopfbereich dieser Dosierkammer-Ausgabeeinrichtung angeordnet ist und daß gegenüber dieser Durchflußöffnung auf dem rohrförmig ausgebildeten Steuerschieber eine Ventilverschlußscheibe angeordnet ist, über die die Durchflußöffnung in Bewegungsrichtung des Steuerschiebers gegenüber dem gesamten Innenraum des Dosierkammergehäuses deckelartig verschießbar ist. Bei Anwendung dieser Maßnahme ist es praktisch ausgeschlossen, daß Flüssigkeit aus dem Vorratsbehälter über unkontrollierbare Leckströme nachfließt. Der Druck innerhalb des Vorratsbehälters wirkt sich auf die Ausgabemenge der Flüssigkeit damit überhaupt nicht mehr aus. Die ausgegebene Flüssigkeit ist nur noch abhängig vom tatsächlichen durch das Dosierkammergehäuse definierte Volumen festgelegt.

Häufig ist es erforderlich oder auch nur zweckmäßig, Getränkekonzentratbehälter innerhalb eines Getränkeautomaten zu kühlen. Die Kühlphasen erfolgen üblicherweise intermittierend. Meßtechnisch und kühltechnisch bedingt verändert sich während den intermittierenden Kühlphasen die Temperatur innerhalb des Vorratsbehälters. Dadurch können Druckschwankungen in formstabil ausgestalteten Vorratsbehältern hervorgerufen werden. Durch die Verwendung von flexiblen Foliensäcken für die Aufnahme der dosiert auszugebenden Flüssigkeiten ist ein Volumenausgleich gegeben, der wesentliche Veränderungen des Innendrucks im Vorratsbehälter verhindert. Die besondere Ausgestaltung der Dosierkammer-Ausgabeeinrichtung mit der zentral im Kopfbereich angeordneten und deckelartig durch die Ventilverschlußscheibe des Steuerschiebers verschließbaren eingangsseitigen Durchflußöffnung sorgt aber außerdem und zusätzlich dafür, daß sich die Druckunterschiede innerhalb des Vorratsbehälters nicht auf die Dosiermengen auswirken.

Nach einer bevorzugten Ausgestaltung ist die Dosierkammer-Ausgabeeinrichtung der erfindungsgemäßen Anordnung dadurch gekennzeichnet, daß auf der Ventilverschlußscheibe in die eingangsseitige Durchflußöffnung dieser Dosierkammer-Ausgabeeinrichtung hineinragende Führungsrippen angeordnet sind. Dami wird die Führungsbahn für den Steuerschieber bis in die eingangsseitige Durchflußöffnung der Dosierkammer-Ausgabeeinrichtung axial verlängert.

Nach einer weiteren bevorzugten Ausgestaltung sind längsgerichtete Führungsrippen zwischen dem Außenmantel des rohrförmig ausgebildeten Steuerschiebers und der zylindrischen Wandung der Dosierkammer-Ausgabeeinrichtung angeordnet. Damit kann, ohne daß Gefahr für eine Verkantung des Steuerschiebers innerhalb des Dosierkammergehäuses gegeben ist, der Spalt zwischen dem Steuerschieber und der Wandung des Dosierkammergehäuses genügend groß ausgebildet werden und damit die Reibung zwischen diesem Steuerschieber und dem Dosierkammergehäuse herabgemindert werden. Herstellungstechnisch bedingt ist es vorteilhaft, daß die längsgerichteten Führungsrippen am Außenmantel des rohrförmig ausgebildeten Steuerschiebers angeordnet sind.

Es ist anzustreben, daß die wesentlichen Teile der Dosierkammer-Ausgabeeinrichtung einheitlich gestaltet sind und daß der Arbeitshub des Steuerschiebers ebenfalls einheitlich gleich gewählt ist. Diese Maßnahme ist von großer Bedeutung für den Einsatz in Getränkeautomaten, bei welchem ein durch ein Elektromagnetsystem im Gerätegehäuse erzeugter Magnetfluß den als Tauchanker betätigbaren Steuerschieber steuert. Durch gleichartige Ausgestaltung der Teile und gleiche Arbeitshübe kann auch der zu erzeugende Magnetfluß standartisiert sein. Dessen ungeachtet muß aber die Möglichkeit gegeben sein, unterschiedliche Mengen von Flüssigkeiten zu dosieren. Dieses Erfordernis ergibt sich aus den unterschiedlichen Beschaffenheiten der zu dosierenden Flüssigkeiten, nämlich den unterschiedlichen Getränkekonzentraten. In Abhängigkeit von der jeweiligen Art der verwendeten Getränkekonzentrate sind unterschiedliche Mischungsverhältnisse mit der weiteren Komponente, nämlich dem karbonisierten Wasser erforderlich.

Um diese unterschiedlichen Dosiermengen zu erzielen und trotzdem auf ein möglichst einheitliches Dosiersystem zurückgreifen zu können, ist es im Rahmen der vorliegenden Erfindung zweckmäßig, die Anordnung dahingehend auszugestalten, daß die eingangsseitige Durchflußöffnung in einem mit dem Gehäuse der Dosierkammer-Ausgabeeinrichtung lösbar verbundenen Dosierkammer-Kappe mit ein Innenvolumen umgrenzenden Seitenwandungen liegt. Ohne daß der Hubbereich des Steuerschiebers verändert zu werden braucht, ist durch entsprechend ausladende bzw. einengende Ausgestaltungen dieser Seitenwandbereiche das Innenvolumen der gesamten Dosierkammer-Ausgabeeinheit entsprechend dem verwendeten Konzentrat variabel anpaßbar. Ist diese Gehäusekappe der Dosierkammer-Ausgabevorrichtung baulich in den Anschlußstutzen des Flüssigkeitsbehälters integriert, so wird eine unmittelbare Beziehung zwischen der Art des Getränkekonzentrats und der Dosiermenge erreicht.

Einzelheiten der erfindungsgemäßen Anordnung sind anhand eines in der Zeichnung dargestellten Ausführungsbeispiels im folgenden näher beschrieben. Es zeigen:

Fig. 1 eine Schrägansicht eines Getränkeautomaten mit Vorratsbehältern für Geetränkekonzentrate,

Fig. 2 und Fig. 3 Schrägansichten von Flüssigkeits-Vorratsbehältern ohne und mit einer Dosierkammer-Ausgabeeinrichtung

Fig. 4 eine Ansicht eines Vorratsbehälters für Getränkekonzentrate mit einer Dosierkammer-Ausgabeeinheit.

Fig. 5 und Fig. 6 unterschiedliche Ausgestaltungen von eingangsseitigen Gehäusekappen für Dosierkammer-Ausgabeeinheiten.

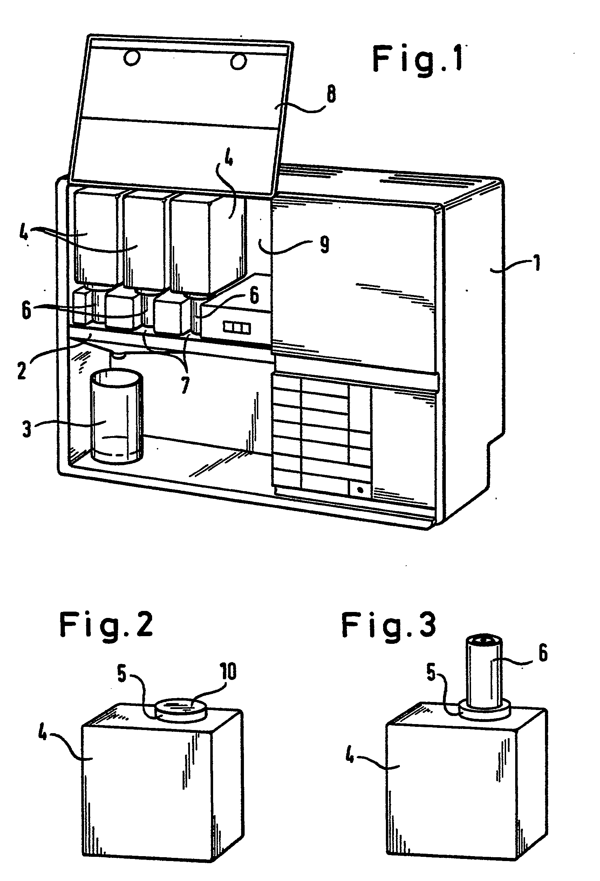

Der in Fig. 1 dargestellte Getränkeautomat dient dazu, innerhalb des Gerätegehäuses 1 mit $CO_2$-Gas angereichertes und gekühlt bereitgehaltenes Wasser mit einem Getränkekonzentrat innerhalb einer Mischrinne 2 zu vermischen und das dabei entstandene Erfrischungsgetränk in ein Trinkgefäß 3 auszugeben. Um zu ermöglichen, daß verschiedene Arten von Erfrischungsgetränken hergestellt werden können, sind im vorliegendem Fall drei Arten von Getränkekonzentraten in drei Vorratsbehältern 4 in den Getränkeautomaten oberhalb der Mischrinne 2 eingesetzt und zwar derart, daß deren Ausgabeöffnungen nach unten gerichtet sind. Jedem dieser Vorratsbehälter 4 ist an einem Anschlußstutzen 5 der Ausgabeöffnung eine Dosierkammer-Ausgabeeinrichtung 6 zugeordnet. Diese Dosierkammer-Ausgabeeinrichtung enthält einen Steuerschieber, welcher mit einem ferromagnetischen Anker ausgestattet ist. Im Gehäuse 1 sind Elektromagneten angeordnet, welche im Bereich der Aufnahmespalte 7 für die Dosierkammer-Ausgabeeinrichtungen 6 ein Magnetfeld erzeugen können, wodurch der Steuerschieber innerhalb der Dosierkammer-Ausgabeeinrichtung 6 beeinflußt wird. Dadurch wird eine dosierte Portion von Getränkekonzentrat der Mischrinne 2 zugeführt, in welcher der Mischvorgang mit ebenfalls in die Mischrinne 2 dosiert zugeführtes karbonisiertes Wasser durchgeführt wird. Die mit einer Klappe 8 abdeckbare Gehäusekammer 9, in welcher die Vorratsbehälter 4 untergebracht sind, ist an den Kältekreislauf einer Kühleinrichtung angeschlossen, damit die Getränkekonzentrate gekühlt bevorratet sind und so für das Mischgetränk zur Verfügung stehen.

Die Fig. 2 zeigt einen Vorratsbehälter 4 für Konzentratsflüssigkeiten, wie er vom Abfüller bis zum Anwender geliefert wird. Die innerhalb des Anschlußstutzens 5 liegende Ausgabeöffnung ist durch einen Foliendeckel 10 verschlossen. Die Fig. 3 zeigt einen Vorratsbehälter 4 für ein Getränkekonzentrat mit auf den Anschlußstutzen 5 aufgesetzter Dosierkammer-Ausgabeeinrichtung 6.

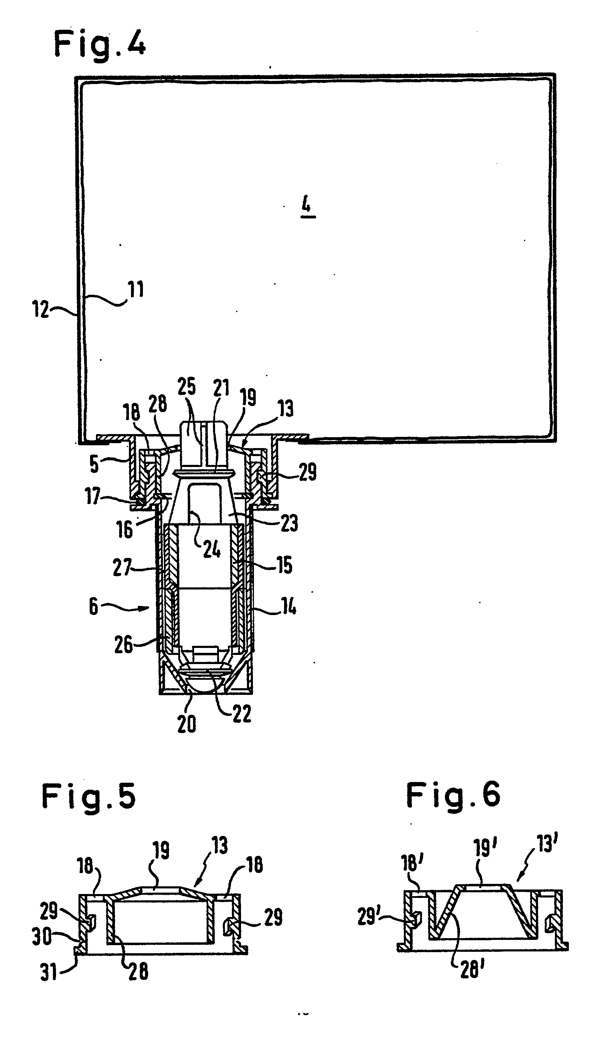

Die Einzelheiten des Vorratsbehälters 4 und der Dosierkammer-Ausgabeeinrichtung 6 für Getränkekonzentrate sind aus der Schnittdarstellung gemäß Fig. 4 erkenntlich. Der Vorratsbehälter 4 besteht aus einem Foliensack 11 mit im wesentlichen flexiblen Wandungen. Diese Wandungen des Foliensacks 11 sind am Anschlußstutzen 5 des Vorratsbehälters 4 ringförmig fest verbunden. Umgeben ist dieser Foliensack von im wesentlichen formstabilen, luftdurchlässigen Behälterwandungen 12 in Form eines aus den Fig. 2 und 3 ersichtlichen Quaders. Als Material für die Behälterwandungen 12 bietet sich bevorzugterweise Pappkarton an. Diese Wandungen 12 bilden eine Einheit und sind ebenfalls am Anschlußstutzen 5 des Vorratsbehälters 4 über die Wandung des Foliensacks 11 befestigt.

Die Dosierkammer-Ausgabeeinheit 6 wird gebildet durch ein eingangsseitig durch eine Gehäusekappe 13 erweitertes Dosierkammer-Gehäuse 14, in welchem ein rohrförmig ausgebildeter Steuerschieber 15 höhenverschieblich angeordnet ist.

Die Gehäusekappe 13 ist aufbautechnisch integrierter Bestandteil des Anschlußstutzens 5 des Vorratsbehälters 4. Das Dosierkammer-Gehäuse 14 ist über kurze auf dem Umfang verteilte Schraubengänge 29 mit der Gehäusekappe 13 verbunden und über eine Dichtungsscheibe 16 gegenüber dieser Gehäusekappe 13 abgedichtet. Der Dichtring 17 ist zur Abdichtung nach außen vorgesehen, da aus fertigungstechnischen Gründen bei der Herstellung der Schraubengänge 25 in der oberen Abschlußwandung der Gehäusekappe 13 Durchbrüche 18 vorgesehen sind.

In der im wesentlichen rotationssymmetrisch ausgestalteten Dosierkammer-Ausgabeeinrichtung 6 sind achszentral in der Gehäusekappe 13 die eingangsseitige Durchflußöffnung 19 und am unteren Ende des Dosierkammer-Gehäuses 14 die ausgangsseitige Durchflußöffnung 20 angeordnet. Gegenüber diesen Durchflußöffnungen 19, 20 sind auf dem Steuerschieber 15 Ventilverschlußscheiben 21, 22 getragen, welche je nach Höhenendlage des Steuerschiebers 14 die eingangsseitige Durchflußöffnung 19 oder - wie in der Fig. 4 dargestellt - die ausgangsseitige Durchflußöffnung 20 alternierend verschließen. Der Steuerschieber 15 ist im wesentlichen rohrförmig ausgebildet und trägt zur eingangsseitigen Ventilverschlußscheibe 21 in einen zylindrischen Aufsatz 23 mit Durchbrüchen 24. Oberhalb dieser Ventilverschlußscheibe 21 ragen kreuzförmig ausgestaltete Führungsrippen 25 in die eingangsseitige Durchflußöffnung 19 als Führungselemente hinein. Der Steuerschieber 15 ist mit einem Ring 26 aus ferromagnetischem Material ausgestattet, der als Tauchanker innerhalb eines im Gerätegehäuse 1 untergebrachten Elektromagnetsystems durch Erregung eines magnetischen Feldes dahingehend beeinflußt wird, daß der Steuerschieber 15 aus der dargestellten Lage, bei der die ausgangsseitige Durchflußöffnung 20 verschlossen ist, in die obere Lage gehoben wird, in der die eingangsseitige Durchflußöffnung 19 verschlossen ist. Auf dem Mantelumfang des Steuerschiebers 15 sind längsverlaufende Führungsrippen 27 angeordnet, so daß gute Gleiteigenschaften zwischen dem Steuerschieber 15 und der Wandung des Dosierkammer-Gehäuses 14 gegeben sind.

In der in der Fig. 4 dargestellten Lage des Steuerschiebers 15 kann im Vorratsbehälter 4 vorhandenes Getränkekonzentrat in den Innenraum der Dosierkammer-Ausgabeeinrichtung 6 durch deren eingangsseitige Durchflußöffnung 19 infolge eigener Schwerkraft einfließen. Das in der Dosierkammer-Ausgabeeinrichtung 6 vorhandene Luftvolumen strömt in den Vorratsbehälter 4. Durch die Tatsache, daß diese zuströmende Luft ursprünglich wärmer ist als das normalerweise gekühlt ausgegebene Getränkekonzentrat, ist nach Abkühlung dieser Luft ein Volumendefizit gegeben. Da die Wandung 11 des Foliensacks flexibel ist und die formstabile Wandung diesen Foliensack nicht hermetisch abschließt, wird bereits durch leichtes Einsacken dieses Foliensacks diesem Volumendefizit begegnet, so daß innerhalb des Vorratsbehälters 4 kein Unterdruck auftritt. Durch intermittierende Kühlvorgänge hervorgerufene Temperaturunterschiede und damit Volumenveränderungen innerhalb des Vorratsbehälters 4 werden ebenfalls durch die Flexibilität des Foliensacks 11 ausgeglichen.

Durch die Erzeugung eines Magnetfelds durch ein im Gerätegehäuse 1 angeordnetes Elektromagnetsystem wird auf den ferromagnetischen Ring 26 des Steuerschiebers 15 eine Hubkraft ausgeübt. Infolgedessen wird die eingangsseitige Durchflußöffnung 19 durch die Ventilverschlußscheibe 21 verschlossen, so daß kein Getränkekonzentrat mehr aus dem Vorratsbehälter 4 in die Dosierkammer-Ausgabeeinrichtung 6 gelangen kann, während die ausgangsseitige Durchflußöffnung 20 geöffnet wird und die ursprünglich in der Dosierkammer-Ausgabeeinrichtung 6 vorhandene Menge an Getränkekonzentrat austreten kann. Das ausströmende Volumen wird wiederum innerhalb der Dosierkammer-Ausgabevorrichtung 6 durch Luft ersetzt. Durch diese Dosierkammer-Ausgabevorrichtung ist eine hohe Genauigkeit des Ausgabevolumens gegeben Diese Genauigkeit ist zur Erzielung eines optimalen Mischungsverhältnisses mit dem ebenfalls dosiert in die Mischrinne 2 eingeführten karbonisierten Wasser von größter Bedeutung.

Unterschiedliche Getränkekonzentrate erfordern unterschiedliche Dosierungsmengen. Um mit einer bezüglich der wesentlich Aufbauteile einheitlichen Dosierkammer-Ausgabeeinrichtung dieser Forderung gerecht zu werden, reduziert sich der Aufwand für die Variantenbildung auf die unterschiedliche Ausgestaltung der Seitenwandungen 28 der Gehäusekappe 13. In Fig. 5 ist die gleiche Gehäusekappe 13 dargestellt, wie sie auch in Fig. 4 zu sehen ist. Demgegenüber zeigt Fig. 6 eine Gehäusekappe 13' mit abgeschrägten Wandungen 28', welche konisch zur Durchflußöffnung 19' zusammenlaufen. Dadurch ist gegenüber der Verwendung einer Gehäusekappe 13 nach Fig. 5 bei einer Ausgestaltung der Gehäusekappe 13' nach Fig. 6 eine Volumenveränderung in diesem Bereich und damit für die gesamte Dosierkammer-Ausgabeeinrichtung 6 gegeben. Da diese Gehäusekappen 13 bzw 13' in den Anschlußstutzen 5 des Behälters 4 integriert sind, ist ein unmittelbarer Bezug zur Beschaffenheit des verwendeten Getränkekonzentrats gegeben. Eine weitere Volumenreduzierung in der Dosierkammer-Ausgabeeinrichtung 6 ist durch Einfügung eines zusätzlichen Rohreinsatzes in den Steuerkolben 15 möglich.

Sollbruchstellen 30 dienen dazu, daß nach dem Entfernen des Dosierkammergehäuses 14 aus der Gehäusekappe diese von ihrem Flansch abgetrennt wird und somit für eine weitere Verbindung nicht mehr funktionstüchtig ist.

**Patentansprüche**

1. Anordnung zum Bereithalten und zur dosierten Abgabe von Flüssigkeiten, insbesondere von Getränkekonzentraten, unter Verwendung eines Flüssigkeits-Vorratsbehälters, an dessen in der Betriebslage untenliegenden Ausgabeöffnung eine Dosierkammer-Ausgabeeinrichtung mit eingangsseitigen und ausgangsseitigen alternierend durch einen im Dosierkammergehäuse verschiebbaren Steuerschieber verschließbaren Durchflußöffnungen angeordnet ist, wobei die Dosierkammer-Ausgabeeinrichtung durch die Schwerkraft der Flüssigkeit unter Luftaustausch zum Volumenausgleich vom Vorratsbehälter je nach Lage des Steuerschiebers vom Flüssigkeits-Vorratsbehälter gefüllt bzw. nach unten ins Freie entleerbar ist, dadurch gekennzeichnet, daß der Vorratsbehälter (4) aufgebaut ist aus einem gasundurchlässigen und im wesentlichen flexiblen Foliensack (11) und einer im wesentlichen formstabilen, luftdurchlässigen, den flexiblen Foliensack (11) umschließende Behälterwandung (12) und daß die im wesentlichen formstabile Behälterwandung (12) über den flexiblen Foliensack (11) an einer die Ausgabeöffnung bildenden Anschlußstutzen (5) befestigt ist, mit dem die Dosierkammer-Ausgabeeinrichtung (6) verbindbar ist.

2. Anordnung nach Anspruch 1, dadurch gekennzeichnet, daß die im wesentlichen formstabile Behälterwandung (12) den flexiblen Foliensack (11) quaderförmig umschließt.

3. Anordnung nach einem der Ansprüche 1 oder 2, dadurch gekennzeichnet, daß die Behälterwandung (12) aus Pappkarton besteht.

4. Anordnung nach Anspruch 1 mit einer Dosierkammer-Ausgabeeinrichtung, in welcher ein rohrförmig ausgebildeter Steuerschieber mit in der Kohrwandung integriertem Tauchanker eines Tauchanker-Elektromagnetsytems längsverschieblich angeordnet ist, dadurch gekennzeichnet, daß die eingangsseitige Durchflußöffnung (19) in die Dosierkammer-Ausgabeeinrichtung (6) zentral im Kopfbereich dieser Dosierkammer-Ausgabeeinrichtung 6 angeordnet ist und daß gegenüber dieser Durchflußöffnung (19) auf dem rohrförmig ausgebildeten Steuerschieber (15) eine Ventilverschlußscheibe (21) angeordnet ist, über die die Durchflußöffnung (19) in Bewegungsrichtung des Steuerschiebers (15) gegenüber dem gesamten Innenraum des Dosierkammergehäuses (14) deckelartig verschließbar ist.

5. Anordnung nach Anspruch 4, dadurch gekennzeichnet, daß auf dem Steuerschieber (15) oberhalb der Ventilverschlußscheibe (21) in die eingangsseitige Durchflußöffnung (19) der Dosierkammer-Ausgabeeinrichtung (6) hineinragende Führungsrippen (25) angeordnet sind.

6. Anordnung nach einem der Ansprüche 4 oder 5, dadurch gekennzeichnet, daß längsgerichtete Führungsrippen (27) zwischen dem Außenmantel des rohrförmig ausgebildeten Steuerschiebers (15) und der zylindrischen Wandung (14) der Dosierkammer-Ausgabevorrichtung (6) angeordnet sind.

7. Anordnung nach Anspruch 6, dadurch gekennzeichnet, daß die längsgerichteten Führungsrippen (27) am Außenmantel des rohrförmig ausgebildeten Steuerschiebers (15) angeordnet sind.

8. Anordnung nach einem der Ansprüche 4 bis 7, dadurch gekennzeichnet, daß die eingangsseitige Durchflußöffnung (19) in einem mit dem Gehäuse (14) der Dosierkammer-Ausgabevorrichtung (6) lösbar verbundenen Gehäusekappe (13, 13') mit ein Innenvolumen umgrenzende Seitenwandungen (28, 28') liegt.

9. Anordnung nach Anspruch 8, dadurch gekennzeichnet, daß die Gehäusekappe (13, 13') der Dosierkammer-Ausgabeeinrichtung (6) Bestandteil des Flüssigkeitsbehälters (4) ist.

10. Anordnung nach einem der Ansprüche 8 oder 9, dadurch gekennzeichnet, daß die Wandungen (28, 28') der Gehäusekappe (13, 13') in Abhängigkeit des zu dosierenden Volumens der Flüssigkeit ausgestaltet sind.

11. Anordnung nach Anspruch 9, dadurch gekennzeichnet, daß die Gehäusekappen Bruchstellen (30) aufweisen, die eine Trennung der Gehäusekappe vom Gehäusekappenflansch (31) nach dem erstmaligen Entfernen des Dosiergehäuses (14) aus der Ausgabeöffnung des Vorsatzbehälters (4) bewirkt.

**Revendications**

1. Agencement pour la mise à disposition, et pour la distribution dosée de liquides, en particulier de concentrés de boissons, utilisant un réservoir liquide, lequel comporte à son orifice de distribution qui, en position de fonctionnement est situé en bas, un dispositif de chambre de dosage et de distribution muni d'orifices de passage pour liquides, susceptibles d'être fermés alternativement du côté de l'entrée et du côté de la sortie au moyen d'un tiroir de commande que l'on peut faire coulisser dans le corps de la chambre de dosage, le dispositif de dosage et de distribution pouvant, suivant la position du tiroir de commande, être rempli à partir du réservoir sous l'effet de du poids du liquide, avec remplacement par de l'air en vue de la compensation de volume, ou être vidé à l'air libre vers le bas, caractérisé par le fait que le réservoir (4) est constitué par un sac en feuille mince essentiellement souple, étanche aux gaz et par des parois (12) de récipient essentiellement rigides, perméables à l'air, entourant le sac (11) en feuille mince, souple et que les parois (12) de récipient essentiellement rigides sont fixées par l'intermédiaire du sac (11) en feuille mince souple, à un embout de raccordement (5) formant l'orifice de distribution, auquel le dispositif (6) de chambre de dosage et de distribution est capable d'être raccordé.

2. Agencement selon la revendication 1, caractérisé par le fait que les parois (12) de récipient essentiellement rigides entourent le sac (11) en feuille mince souple, en formant un parallélépipède.

3. Agencement selon l'une des revendications 1 ou 2, caractérisé par le fait que les parois (12) du récipient sont en carton.

4. Agencement selon la revendication 1, comportant un, dispositif de chambre de dosage et de distribution dans lequel est disposé, de façon à pouvoir coulisser longitudinalement, un tiroir de commande de forme tubulaire comportant dans sa paroi tubulaire un induit plongeur intégré faisant partie d'un système d'électro-aimant à induit plongeur, caractérisé par le fait que l'orifice (19) de passage pour liquides situé du côté de l'entrée est placé dans le dispositif (6) de chambre de dosage et de distribution, de façon centrée dans la zone de la partie supérieure de ce dispositif (6) de chambre de dosage et de distribution et qu'en face de cet orifice (19) de passage pour liquides est disposé, sur le tiroir de commande (15) de forme tubulaire, un disque de fermeture de valve par l'intermédiaire duquel l'orifice (19) de passage pour liquides peut être fermé comme par un couvercle par rapport à l'ensemble de l'espace intérieur du corps (14) de la chambre de dosage, dans le sens du déplacement du tiroir de commande.

5. Agencement selon la revendication 4, caractérisé par le fait que les nervures de guidage (25) sont disposées sur le tiroir de commande (15) au-dessus du disque (21) de fermeture de valve, lesquelles dépassent dans l'orifice (19) de passage pour liquides du dispositif (6) de chambre de dosage et de distribution, situé du côté de l'entrée.

6. Agencement selon l'une des revendications 4 ou 5, caractérisé par le fait que des nervures de guidage (27) orientées longitudinalement sont disposées entre la surface extérieure du tiroir de commande (15) de forme tubulaire et la paroi cylindrique (14) du dispositif (6) de chambre de dosage et de distribution.

7. Agencement selon la revendication 6, caractérisé par le fait que les nervures de guidage (27) orientées longitudinalement sont disposées sur la surface extérieure du tiroir de commande (15) de forme tubulaire.

8. Agencement selon l'une des revendications 4 à 7, caractérisé par le fait que l'ouverture (19) de passage pour liquides située du côté de l'entrée est pratiquée dans un capuchon (13, 13') relié de manière détachable au corps (14) du dispositif (6) de chambre de dosage et de distribution, et comportant des parois latérales (28, 28') qui délimitent un volume intérieur en entourant celui-ci.

9. Agencement selon la revendication 8, caractérisé par le fait que le capuchon (13, 13') du dispositif de chambre de dosage et de distribution fait partie du réservoir (4).

10. Agencement selon l'une des revendications 8 ou 9, caractérisé par le fait que les parois (28, 28') du capuchon (13, 13') sont conformées en fonction du volume de liquide qui doit être dosé.

11. Agencement selon la revendication 9, caractérisé par le fait que les capuchons présentent des zones de rupture (30) qui provoquent une séparation du capuchon d'avec le rebord (31) du capuchon, la première fois que l'on détache le corps de dosage (14) de l'orifice de distribution du réservoir (4)

**Claims**

1. Arrangement for holding ready and for metered delivery of liquids, in particular of beverage concentrates, with the use of a liquid reserve container, at the delivery opening – lying at the bottom in the operative position – of which a metering chamber delivery equipment with throughflow openings is arranged, which are alternately closable at the entry side and at the exit side by a control slide displaceable in the metering chamber housing, wherein the metering chamber delivery equipment is in accordance with the position of the control slide either filled from the liquid reserve container or emptiable downwardly into the open by the gravitational force of the liquid with air exchange for volume compensation, characterised thereby, that the reserve container (4) is built up of a gas-tight and substantially flexible foil sac (11) and a container wall (12), which is substantially stable in shape and permeable by air and which encloses the flexible foil sac (11) and that the container wall (12) of substantially stable shape is fastened by way of the flexible foil sac (11) to a connecting nipple (5), which is connectable with the metering chamber delivery equipment (6) and forms the delivery opening.

2. Arrangement according to claim 1, characterised thereby, that the container wall (12) of substantially stable shape encloses the flexible foil sac (11) in parallelepipedonal shape.

3. Arrangement according to one of the claims 1 and 2, characterised thereby, that the container wall (12) consists of cardboard.

4. Arrangement according to claim 1 with a metering chamber delivery equipment, in which a tubularly constructed control slide with a plunger armature, which is integrated into the tube wall, of a plunger armature electromagnet system is arranged to be longitudinally displaceable, characterised thereby, that the entry throughflow opening (19) into the metering chamber delivery equipment (6) is arranged centrally in the head region of this metering chamber delivery equipment (6) and that a valve closure washer (21), by way of which the throughflow opening (19) is closable in direction of movement of the control slide (15) and in the manner of a lid against the entire interior space of the metering chamber housing (14), is arranged on the tubularly constructed control slide (15) and opposite this throughflow opening (19).

5. Arrangement according to claim 4, characterised thereby, that guide ribs (25), which project into the entry throughflow opening (19) of the metering chamber delivery equipment (6), are arranged above the valve closure washer (21) on the control slide (15).

6. Arrangement according to one of the claims 4 and 5, characterised thereby, that longitudinally oriented guide ribs (27) are arranged between the outer envelope of the tubularly constructed control slide (15) and the cylindrical wall (14) of the metering chamber delivery equipment (6).

7. Arrangement according to claim 6, characterised thereby, that the longitudinally oriented guide ribs (27) are arranged at the outer envelope of the tubularly constructed control slide (15).

8. Arrangement according to one of the claims 4 to 7, characterised thereby, that the entry throughflow opening (19) lies with side walls (28, 28') bounding an internal volume in a housing cap (13, 13') detachably connected with the housing (14) of the metering chamber delivery equipment (6).

9. Arrangement according to claim 8, characterised thereby, that the housing cap (13, 13') of the metering chamber delivery equipment (6) is component of the reserve container (4).

10. Arrangement according to one of the claims 8 and 9, characterised thereby, that the walls (28, 28') of the housing cap (13, 13') are structured in dependence on the volume of the liquid to be metered.

11. Arrangement according to claim 9, characterised thereby, that the housing caps display frangible places (30) which effect a separation of the housing cap from the housing cap flange (31) after the first removal of the metering housing (14) from the delivery opening of the reserve container (4).

Fig.1

Fig.2

Fig.3

Fig.4

Fig.5

Fig.6